(19) Europäisches Patentamt
European Patent Office
Office européen des brevets

(11) EP 3 862 382 A1

(12) EUROPEAN PATENT APPLICATION
published in accordance with Art. 153(4) EPC

(43) Date of publication:
**11.08.2021 Bulletin 2021/32**

(21) Application number: **19869368.1**

(22) Date of filing: **03.10.2019**

(51) Int Cl.:
*C08J 5/18* (2006.01) *B32B 27/00* (2006.01)
*B32B 27/18* (2006.01) *B32B 27/20* (2006.01)
*B32B 27/30* (2006.01) *C08F 265/06* (2006.01)
*C08K 5/3492* (2006.01) *C08L 33/10* (2006.01)
*C08L 55/00* (2006.01)

(86) International application number:
**PCT/JP2019/039085**

(87) International publication number:
**WO 2020/071477 (09.04.2020 Gazette 2020/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2018 JP 2018189326**

(71) Applicant: **Kuraray Co., Ltd.**
**Kurashiki-shi, Okayama 710-0801 (JP)**

(72) Inventors:
- **KODERA, Junpei**
  **Tainai-shi, Niigata 959-2691 (JP)**
- **HASHIZUME, Toru**
  **Tainai-shi, Niigata 959-2691 (JP)**
- **SAKAMOTO, Shigeru**
  **Tainai-shi, Niigata 959-2691 (JP)**

(74) Representative: **Müller-Boré & Partner Patentanwälte PartG mbB**
**Friedenheimer Brücke 21**
**80639 München (DE)**

# (54) ACRYLIC RESIN FILM

(57) An acrylic resin film, comprising an acrylic multi-layered polymer (A) comprising an outer layer composed of a thermoplastic polymer (III) and a layer composed of a cross-linked elastomer which the outer layer covers on the surface of, a methacrylic resin (B) comprising not less than 99 % by mass of a unit derived from methyl methacrylate and having a weight average molecular weight of not less than 50,000 and not more than 200,000 and an ultraviolet absorbing agent (C) having a hydroxyphenyltriazine skeleton, wherein the contained amount of the ultraviolet absorbing agent (C) is 0.1 to 1.5 % by mass relative to the total amount of the acrylic multi-layered polymer (A) and the methacrylic resin (B), the cross-linked elastomer layer comprises an intermediate layer composed of a cross-linked rubber polymer (II) and an inner layer composed of a cross-linked polymer (I) which the intermediate layer covers on the surface of, the cross-linked elastomer layer has an average diameter of not more than 120 nm, and an amount of acetone insoluble contained in the film is 35 to 55 % by mass.

EP 3 862 382 A1

**Description**

TECHNICAL FIELD

The present invention is related to an acrylic resin film. Specifically, the present invention is related to an acrylic resin film suitable used for decoration or in building materials and having excellent weatherability, processability and forming stability.

BACKGROUND ART

As a resin film used for decoration and in building materials, for example, a thermoplastic resin film having a glossy appearance on the surface or a thermoplastic resin film having a matte (delustering) appearance on the surface is used. Printing, laminating of different type of thermoplastic resin film or thermosetting resin film, or bonding of metal steel plate or the like with an adhesive layer may be performed on at least one surface of the resin film. Resin films used for decoration and in building materials often continue to be used in decorative objects or buildings for a long period of ten to several decades. During that time, the resin films undergo discoloration, cracks, cloudiness, surface scratches, peeling, and the like. Therefore, high weatherability is required for resin films used for decoration and in building materials.

Various acrylic resin films have been proposed. For instance, Patent Document 1 discloses a decorative film suitable for adhesion to a metal substrate, comprising a transparent film layer in the visible light region having a first surface and a second surface facing the first surface and a transparent pressure-sensitive adhesive layer in the visible light region placed on the second surface, wherein the film layer comprises at least one ultraviolet absoring agent selected from the group consisting of benzotriazole UV absoring agents, hydroxyphenyltriazine UV absoring agents and benzophenone UV absoring agents, the average transmittance of the film layer at wavelengths of 280 nm to 380 nm is not more than 1.5%, and the pressure-sensitive adhesive layer comprises a (meth)acrylic polymer having an amino group capable of forming a metal complex with a metal ion generated from the metal substrate.

Patent Document 2 discloses a polarizer protection film composed of a thermoplastic resin composition with a glass transition temperature of 110 °C or more comprising a thermoplastic acrylic resin and a ultraviolet absoring agent having a molecular weight of not less than 700. As one of the ultraviolet absoring agent, disclosed is an ultraviolet absorbing agent having a hydroxyphenyltriazine skeleton.

Patent Document 3 discloses a method for producing a film, comprising heat melting an acrylic thermoplastic resin, discharging the heat-melted product from T-die, and pressurizing the discharged product between a first rubber roll and a second rubber roll, wherein the acrylic thermoplastic resin comprises 100 parts by mass of an acrylic multi-layered polymer particle (A) and 1 to 600 parts by mass of an acrylic thermoplastic polymer (B), the acrylic multi-layered polymer particle (A) is a three-layer structure polymer consisted of a first layer being a cross-linked polymer layer composed of 30 to 98.99 % by mass of a methyl methacrylate unit, 1 to 70 % by mass of an acrylic acid alkyl ester unit wherein the alkyl group is composed of 1 to 8 of carbon atoms, and 0.01 to 2 % by mass of a polyfunctional monomer unit, a second layer being a cross-linked elastomeric polymer layer composed of 70 to 99.9 % by mass of an acrylic acid alkyl ester unit wherein the alkyl group is composed of 1 to 8 of carbon atoms, 0 to 30 % by mass of a methyl methacrylate unit, and 0.1 to 5 % by mass of a polyfunctional monomer unit, and a third layer being a hard thermoplastic polymer layer composed of 80 to 99 % by mass of a methyl methacrylate unit, 1 to 20 % by mass of an acrylic acid alkyl ester unit wherein the alkyl group is composed of 1 to 8 of carbon atoms, the acrylic multi-layered polymer particle (A) has a particle diameter of 0.05 to 0.25 μm, the acrylic thermoplastic polymer (B) is composed of not less than 80 % by mass of a methyl methacrylate unit and not more than 20 % by mass of a unit of vinyl monomer copolymerizable with methyl methacrylate and has a limiting viscosity of 0.3 to 1.0 dl/g. In Patent Document 3, exemplified is hydroxyphenyltriazine UV absoring agents as an optional ingredient.

CITATION LIST

PATENT LITERATURES

Patent Document 1 : JP 2017-8222 A
Patent Document 2 : JP 2011-227530 A
Patent Document 3 : JP 2017-213815 A

SUMMARY OF THE INVENTION

PROBLEMS TO BE RESOLVED BY THE INVENTION

In order to improve weatherability of a resin film, an ultraviolet absoring agent may be added to a resin which is raw material of the resin film to form the resin film. For ensure long-term weatherability, a large amount of ultraviolet absoring agent has to be added. Adding of a large amount of ultraviolet absoring agent may produce poor appearance due to bleed-out, increase the manufacturing cost and deteriorate the formability and the forming stability.

An object of the present invention is to provide an acrylic resin film suitable used for decoration or in building materials and excellent in weatherability, processability and forming stability.

MEANS FOR SOLVING THE PROBLEMS

After conducting extensive studies, the present inventors completed an invention including the following aspects.

[1] A film, comprising
an acrylic multi-layered polymer (A) comprising an outer layer composed of a thermoplastic polymer (III) and a layer composed of a cross-linked elastomer which the outer layer covers on the surface of,
a methacrylic resin (B) comprising not less than 99 % by mass of a unit derived from methyl methacrylate and having a weight average molecular weight of not less than 50,000 and not more than 200,000 and an ultraviolet absorbing agent (C) having a hydroxyphenyltriazine skeleton; wherein the contained amount of the ultraviolet absorbing agent (C) is 0.1 to 1.5 % by mass relative to the total amount of the acrylic multi-layered polymer (A) and the methacrylic resin (B),
a mass ratio of the methacrylic resin (B) to the acrylic multi-layered polymer (A) is 10/90 to 50/50, the layer of the cross-linked elastomer comprises an intermediate layer composed of a cross-linked rubber polymer (II) and an inner layer composed of a cross-linked polymer (I) which the intermediate layer covers on the surface of,
the cross-linked polymer (I) comprises 40 to 98.5 % by mass of a structural unit derived from methyl methacrylate, 1 to 59.5 % by mass of a structural unit derived from a monofunctional monomer other than methyl methacrylate and 0.05 to 0.4 % by mass of a structural unit derived from a polyfunctional monomer,
the cross-linked rubber polymer (II) comprises 90 to 98.9 % by mass of a structural unit derived from an acrylic acid alkyl ester wherein the alkyl group is composed of 1 to 8 of carbon atoms, 0.1 to 8.3 % by mass of a structural unit derived from a monofunctional monomer other than acrylic acid alkyl ester, and 1 to 1.7 % by mass of a structural unit derived from a polyfunctional monomer,
the thermoplastic polymer (III) comprises 80 to 100 % by mass of a structural unit derived from a methacrylic acid alkyl ester wherein the alkyl group is composed of 1 to 8 of carbon atoms, and 0 to 20 % by mass of a structural unit derived from a monofunctional monomer other than methacrylic acid alkyl ester,
the layer of the cross-linked elastomer has an average diameter of not more than 120 nm,
the amount of the cross-linked rubber polymer (II) is 80 to 90 % by mass relative to the total amount of the cross-linked polymer (I) and the cross-linked rubber polymer(II), and
an amount of acetone insoluble relative to the amount of the film is 35 to 55 % by mass.

[2] The film according to [1], wherein a breaking elongation in tensile testing is not less than 50 % in a MD direction of the film.

[3] The film according to [1], wherein a slope is not less than $1.0 \times 10^4$ Pa, wherein the slope is a slope a of a linear function : $\eta = a \times t + b$ obtained by approximating a relation of a measurement time t [unit: second] and an uniaxial elongation viscosity $\eta$ [unit : Pa·s] as measured by an uniaxial elongation viscosity measurement in the range from the time when 0.03 second has passed from the onset of the measurement to the time when 0.1 second has passed from the onset of the measurement by the least-square method.

[4] The film according to [1], wherein a light transmission at a wavelength of 350 nm is not more than 5 %, the light transmission is determined by measuring a film irradiated with ultraviolet for 500 hours at a black panel temperature of 83 °C, 50 % relative humidity, and an irradiation energy of 100 mW/$cm^2$.

[5] The film according to [1], wherein a thickness of the film is not less than 20 μm and not more than 100 μm.

[6] The film according to any one of [1] to [5], further comprising a delustering agent.

[7] A film comprising a functional layer and the film according to any one of [1] to [6] on which the functional layer is layered.

[8] A film comprising a laminate of the film according to any one of [1] to [7] and another thermoplastic resin film.

[9] The film according to any one of [1] to [8], being used for decoration.

[10] The film according to any one of [1] to [9], being used in building material.

ADVANTAGEOUS EFFECTS OF THE INVENTION

The acrylic resin film of the present invention is excellent in weatherabilty, processability, and forming stability. The acrylic resin film of the present invention is suitable for decoration or in building materials.

In the acrylic resin film of the present invention, since the decomposition of the added ultraviolet absorbing agent is suppressed, the amount of the ultraviolet absorbing agent required to enhance the weatherability can be reduced. The acrylic resin film of the present invention has high resistance to processing such as printing, laminating, and adhesion. The acrylic resin film having high strain hardening of the present invention can be formed and processed well even if the forming and processing speed is increased.

EMBODIMENTS FOR CARRYING OUT THE INVENTION

Embodiments of the present invention will be described below, the present invention is not limited to these embodiments.

The acrylic resin film of the present invention comprises an acrylic multilayered polymer (A), a methacrylic resin (B), and an ultraviolet absorbing agent (C).

The total amount of the acrylic multilayered polymer (A), the methacrylic resin (B), and the ultraviolet absorbing agent (C) is preferably 90 to 100 parts by mass, more preferably 96 to 100 parts by mass, still more preferably 97.5 to 99.5 parts by mass, further more preferably 98 to 99.1 parts by mass, and particularly preferably 98 to 99 parts by mass relative to 100 parts by mass of the acrylic resin film of the present invention.

The acrylic multilayered polymer (A) used in the present invention is composed of an outer layer made of a thermoplastic polymer (III) and a layer of a crosslinked elastomer covered in contact with the outer layer.

The thermoplastic polymer (III) is a polymer comprising a structural unit derived from methacrylic acid alkyl ester wherein the alkyl group is composed of 1 to 8 of carbon atoms (in the present application, it is sometimes referred to as C1-8 alkyl methacrylate) and an optional structural unit derived from a monofunctional monomer other than C1-8 alkyl methacrylate. The thermoplastic polymer (III) preferably does not contain a structural unit derived from polyfunctional monomer.

The amount of the structural unit derived from C1-8 alkyl methacrylate constituting the thermoplastic polymer (III) is 80 to 100% by mass, preferably 85-95% by mass, relative to the amount of all structural units constituting the thermoplastic polymer (III).

Examples of the C1-8 alkyl methacrylate can include methyl methacrylate, ethyl methacrylate, butyl methacrylate, 2-ethylhexyl methacrylate, propyl methacrylate, cyclohexyl methacrylate and the like. Of these, methyl methacrylate is preferable.

The amount of the structural unit derived from monofunctional monomers other than C1-8 alkyl methacrylate constituting the thermoplastic polymer (III) is 0 to 20% by mass, preferably 5 to 15% by mass, relative to the amount of all structural units constituting the thermoplastic polymer (III).

Examples of the monofunctional monomer other than C1-8 alkyl methacrylate can include acrylic acid esters such as methyl acrylate, ethyl acrylate, butyl acrylate, 2-ethylhexyl acrylate, and propyl acrylate; aromatic vinyl compounds such as styrene, p-methylstyrene, and $\alpha$-methylstyrene; maleimide compounds such as N-propyl maleimide, N-cyclohexyl maleimide, and N-o-chlorophenyl maleimide. Of these, acrylic acid alkyl esters are preferred, acrylic acid C1-8 alkyl esters are more preferred, and butyl acrylate is even more preferred.

In the thermoplastic polymer (III), the total of the structural unit derived from the C1-8 alkyl methacrylate and the structural unit derived from the monofunctional monomer other than the C1-8 alkyl methacrylate is preferably 100% by mass.

The outer layer may be a single layer made of one type of thermoplastic polymer (III), or may be a multi-layer made of two or more types of thermoplastic polymer (III).

The amount of the thermoplastic polymer (III) is preferably 60 to 70% by mass, more preferably 62 to 68% by mass, and further preferably 64 to 66% by mass relative to the amount of the acrylic multilayered polymer.

The crosslinked elastomer layer comprises an intermediate layer made of the crosslinked rubber polymer (II) and an inner layer made of the crosslinked polymer (I) and covered in contact with the intermediate layer. As for crosslinked elastomer layer, it is preferable that the inner layer and the intermediate layer form a core and a shell. The total amount of the crosslinked polymer (I) and the crosslinked rubber polymer (II) is preferably 30 to 40% by mass, more preferably 32 to 38% by mass, still more preferably 34 to 36% by mass, based on the amount of the acrylic multilayered polymer (A).

The crosslinked polymer (I) is composed of a structural unit derived from methyl methacrylate, a structural unit derived from a monofunctional monomer other than methyl methacrylate, and a structural unit derived from a polyfunctional monomer.

The amount of the structural unit derived from methyl methacrylate constituting the crosslinked polymer (I) is 40 to 98.5% by mass, preferably 45 to 95% by mass, based on the amount of all structural units constituting the crosslinked

polymer (I).

The amount of the structural unit derived from monofunctional monomer other than methyl methacrylate constituting the crosslinked polymer (I) is 1 to 59.5% by mass, preferably 5 to 55% by mass, based on the amount of all structural units constituting the crosslinked polymer (I).

As examples of the monofunctional monomer other than methyl methacrylate, mentioned can be methacrylic acid ester other than methyl methacrylate such as ethyl methacrylate, butyl methacrylate and cyclohexyl methacrylate; acrylic acid ester such as methyl acrylate, ethyl acrylate, butyl acrylate, 2-ethylhexyl acrylate and propyl acrylate; aromatic vinyl compound such as styrene, p-methylstyrene and $\alpha$-methylstyrene; maleimide compound such as N-propyl maleimide, N-cyclohexyl maleimide and N-o-chlorophenyl maleimide. Of these, acrylic acid alkyl ester is preferred, acrylic acid C1-8 alkyl ester is more preferred, and butyl acrylate is even more preferred.

The amount of the structural unit derived from the polyfunctional monomer constituting the crosslinked polymer (I) is 0.05 to 0.4% by mass, preferably 0.1 to 0.3% by mass, based on the amount of all structural units constituting the crosslinked polymer (I).

As examples of the polyfunctional monomer, mentioned can be ethylene glycol dimethacrylate, propylene glycol dimethacrylate, triethylene glycol dimethacrylate, hexanediol dimethacrylate, ethylene glycol diacrylate, propylene glycol diacrylate, triethylene glycol diacrylate, allyl methacrylate, and triallyl isocyanurate.

In the crosslinked polymer (I), the total of the structural unit derived from methyl methacrylate, the structural unit derived from the monofunctional monomer other than methyl methacrylate, and the structural unit derived from the polyfunctional monomer is preferably 100% by mass.

The inner layer may be a single layer made of one kind of crosslinked polymer (I) or a multi-layer made of two or more kinds of crosslinked polymers (I) .

The inner layer composed of the crosslinked polymer (I) is preferably a multi-layer composed of two or more kinds of crosslinked polymers (I) for controlling the flexibility of the crosslinked elastomer layer and having ability to retain low molecular weight additives such as an ultraviolet absorbing agent.

The crosslinked rubber polymer (II) is composed of a structural unit derived from an acrylic acid alkyl ester having an alkyl group having 1 to 8 of carbon atoms (in the present application, it is sometimes referred to as C1-8 alkyl acrylate), a structural unit derived from a monofunctional monomer other than acrylic acid alkyl esters and a structural unit derived from a polyfunctional monomer.

The amount of the structural unit derived from the C1-8 alkyl acrylate constituting the crosslinked rubber polymer (II) is 90 to 98.9 % by mass, preferably 91 'to 97 % by mass based on the amount of all structural units constituting the crosslinked rubber polymer (II).

Examples of the Cl-8 alkyl acrylate can include methyl acrylate, ethyl acrylate, butyl acrylate, 2-ethylhexyl acrylate, and propyl acrylate.

The amount of the structural unit derived from the monofunctional monomer other than acrylic acid alkyl ester is 0.1 to 8.3% by mass, preferably 1.3 to 7.3% by mass, based on the amount of all structural units constituting the crosslinked polymer (II).

As examples of the monofunctional monomer other than acrylic acid alkyl ester, mentioned can be methacrylic acid esters such as methyl methacrylate, ethyl methacrylate, butyl methacrylate and cyclohexyl methacrylate; aromatic vinyl compound such as styrene, p-methylstyrene, and $\alpha$-methylstyrene; maleimide compound such as N-propylmaleimide, N-cyclohexyl maleimide and N-o-chlorophenylmaleimide; conjugated diene such as 1,3-butadiene and isoprene. Of these, methacrylic acid alkyl ester is preferred, C1-8 alkyl methacrylate is more preferred, and methyl methacrylate is even more preferred.

The amount of the structural unit derived from polyfunctional monomer constituting the crosslinked rubber polymer (II) is 1 to 1.7% by mass, preferably 1.2 to 1.6% by mass, and more preferably 1.3 to 1.5% by mass, based on the amount of all structural units constituting the crosslinked rubber polymer (II).

As examples of the polyfunctional monomer, mentioned can be ethylene glycol dimethacrylate, propylene glycol dimethacrylate, triethylene glycol dimethacrylate, hexanediol dimethacrylate, ethylene glycol diacrylate, propylene glycol diacrylate, triethylene glycol diacrylate, allyl methacrylate, and triallyl isocyanurate and the like.

From the viewpoint of improving bending resistance, the amount of the structural unit derived from the polyfunctional monomer in the crosslinked polymer (I) relative to the amount of the structural unit derived from the polyfunctional monomer in the crosslinked rubber polymer (II) is preferably 0.05 to 0.25, more preferably 0.1 to 0.2 in terms of mass ratio. The glass transition temperature of the crosslinked rubber polymer (II) is preferably lower than the glass transition temperature of the crosslinked polymer (I).

In the crosslinked rubber polymer (II), the total of a structural unit derived from C1-8 alkyl acrylate, a structural unit derived from a monofunctional monomer other than acrylic acid alkyl ester, and a structural unit derived from a polyfunctional monomer is preferably 100% by mass.

The intermediate layer may be a single layer made of one kind of crosslinked rubber polymer (II), or may be a multi-layer made of two or more kinds of crosslinked rubber polymer (II).

The amount of the crosslinked rubber polymer (II) is 80 to 90% by mass, preferably 82 to 88% by mass, based on the total amount of the crosslinked polymer (I) and the crosslinked rubber polymer (II).

The intermediate layer composed of the crosslinked rubber polymer (II) mainly has a role of imparting flexibility to the methacrylic resin composition of the present invention.

The molecular chains of the crosslinked polymer (I) constituting the inner layer and the crosslinked rubber polymer (II) constituting the intermediate layer are preferably connected by a graft bond. The molecular chains of the crosslinked rubber polymer (II) constituting the intermediate layer and the thermoplastic polymer (III) constituting the outer layer are preferably connected by a graft bond. Graft bond is a bond that connects a branch part and a main chain of an already completed polymer, wherein a substituent group bonded to the main chain is used as a reaction active site and the branch part to be extended from the active site is produced by a polymerization method (graft polymerization method).

The acrylic multilayered polymer (A) used in the present invention has an average diameter of the crosslinked elastomer layer is 120 nm or less, preferably 60 to 110 nm, more preferably 65 to 105 nm, and further preferably 70 to 100 nm. The average diameter of the crosslinked elastomer layer in the present invention can be measured as follows. Using a hydraulic press forming machine, a methacrylic resin composition comprising the acrylic multilayered polymer (A) is formed into a 3 mm flat plate under the conditions of a mold size of 50 mm × 120 mm, a press temperature of 250 °C., a preheating time of 3 minutes, a pressing pressure of 50 kg/cm$^2$, a pressing time of 30 seconds, a cooling temperature of 20 °C, a pressure during the cooling of 50 kg/cm$^2$, and a cooling time of 10 minutes. Using a microtome, the obtained flat plate is cut at -100 °C in a direction parallel to the long side to obtain a thin section having a thickness of 40 nm. The thin section is dyed with ruthenium. The dyed thin section is observed with a scanning transmission electron microscope (JSM7600F manufactured by JEOL Ltd.) at an acceleration voltage of 25 kV and a photograph is taken. The minor axis and the major axis of the ruthenium-dyed part (exposed part of the crosslinked elastomer layer) are measured. A diameter of the crosslinked elastomer layer is regarded as (minor diameter + major diameter) / 2. After measuring 20 or more diameters of the crosslinked elastomer layer, a number average value (average diameter) of the diameters is calculated.

The acrylic multilayered polymer (A) used in the present invention has a graft ratio of preferably 33 to 50% by mass, more preferably 35 to 48% by mass, and further preferably 40 to 45% by mass. As the the graft ratio decreases, of the crosslinked elastomer layer, the flexibility tends to be improved and the tensile elongation and the flex resistance tend to be improved. As the graft ratio increases, of the crosslinked elastomer layer, the elasticity tends to be improved and the transparency tends to be improved.

The graft ratio can be adjusted by controlling the structural unit derived from the polyfunctional monomer in the crosslinked rubber polymer (II). For example, a polyfunctional monomer having a double bond equivalent of preferably 50 to 250, more preferably 60 to 200 is employed and the amount of a structural unit derived from the polyfunctional monomer is set to preferably 1 to 2% by mass, more preferably 1.2 to 1.8% by mass, still more preferably 1.3 to 1.7% by mass based on the amount of all structural units constituting the crosslinked rubber polymer (II) to form the crosslinked rubber polymer (II). Double bond equivalent is a value obtained by dividing molecular weight of the polyfunctional monomer by the number of double bonds present in one molecule of the polyfunctional monomer.

Graft ratio is calculated from the mass $w_1$ of the acetone insoluble in the acrylic multilayered polymer (A) and the mass ratio R of the total mass of the crosslinked polymer (I) and the crosslinked rubber polymer (II) with respect to the mass wo of the acrylic multilayered polymer (A) by the following formula.

$$\text{Graft ratio} = 100 \times [w_1 - w_0 \times R] / [w_0 \times R]$$

The acrylic multilayered polymer (A) is not particularly limited depending on the production method thereof. For example, emulsion polymerization and the like can be mentioned.

In the case of emulsion polymerization, for example, monomer (i) for constituting the crosslinked polymer (I) is emulsion-polymerized to obtain a latex containing the crosslinked polymer (I), monomer (ii) for constituting the crosslinked rubber polymer (II) is added to the latex containing the crosslinked polymer (I), the monomer (ii) is seed-emulsion polymerized to obtain a latex containing a crosslinked polymer (I) and a crosslinked rubber polymer (II), monomer (iii) for constituting the thermoplastic polymer (III) is added thereto, and the monomer (iii) is seed-emulsified polymerized to obtain a latex containing an acrylic multilayered polymer. Emulsion polymerization is a known method used to obtain a latex containing a polymer. Seed emulsion polymerization is a method in which polymerization reaction of monomer is carried out on the surface of a seed particle. Seed-emulsion polymerization is preferably used to obtain core-shell structural polymer particles.

A polymerization initiator used in the emulsion polymerization and the seed emulsion polymerization is not particularly limited. As examples of the polymerization initiator, mentioned can be a water-soluble inorganic initiator such as potassium persulfate and ammonium persulfate; a redox initiator obtained by using a sulfite or thiosulfate in combination

with the inorganic initiator; and a redox initiator obtained by using ferrous salt or sodium sulfoxylate in combination with an organic peroxide and the like. The polymerization initiator may be added to the reaction system all at once at the start of polymerization, or may be added to the reaction system separately at the start of polymerization and during the polymerization in consideration of the reaction rate and the like.

An emulsifier used in the emulsion polymerization and the seed emulsion polymerization is not particularly limited. As examples of the emulsifier, mentioned can be an anionic emulsifier: dialkyl sulfosuccinates such as sodium dioctyl sulfosuccinate and sodium dilauryl sulfosuccinate, alkylbenzene sulfonates such as sodium dodecylbenzene sulfonate, and alkyl sulfates such as sodium dodecyl sulfate; a nonionic emulsifier: polyoxyethylene alkyl ethers and the like; a nonionic-anionic emulsifier: polyoxyethylene alkyl ether sulfates such as sodium polyoxyethylene alkyl ether sulfate, alkyl ether carboxylic acid salt such as sodium polyoxyethylene tridecyl ether acetate, and the like. The number of moles of oxyethylene structural units added in the nonionic emulsifier and the nonionic-anionic emulsifier is preferably 30 mol or less, more preferably 20 mol or less, and most preferably 10 mol or less in order to prevent the effervescent by the emulsifier from becoming extremely large. These emulsifiers can be used alone or in combination of two or more.

Amounts of the polymerization initiator and emulsifier used can be appropriately set so that the average particle size of the acrylic multilayered polymer (A) contained in the latex is within a desired range. The amount of the emulsifier used varies depending on the type of emulsifier, but is preferably 0.5 to 3 parts by mass, more preferably 1 to 2 parts by mass, based on 100 parts by mass of the total amount of the monomers for producing the acrylic multilayered polymer.

The average particle size of the acrylic multilayered polymer (A) contained in the latex is preferably 80 nm or more and 150 nm or less, and more preferably 90 nm or more and 120 nm or less. If the average particle size of the acrylic multilayered polymer is too small, the viscosity of the latex tends to increase. If the average particle size of the acrylic multilayered polymer (A) is too large, the stress whitening resistance tends to decrease. The average particle size of the acrylic multilayered polymer (A) contained in the latex can be determined as follows. The latex containing the acrylic multilayered polymer (A) is diluted with ion-exchanged water so as to have a concentration of 0.05% by mass, and the obtained diluted solution is thinly cast on a support plate and dried. A gold-palladium alloy is vapor-deposited on the dried product, which is observed with a scanning transmission electron microscope (JSM7600F manufactured by JEOL Ltd.) to determine the number average particle diameter.

In the present invention, the emulsion polymerization of the monomer (i), the seed emulsion polymerization of the monomer (ii) and the seed emulsion polymerization of the monomer (iii) may be sequentially carried out in one polymerization tank, or the polymerization tank may be changed each time the emulsion polymerization of the monomer (i), the seed emulsion polymerization of the monomer (ii), and the seed emulsion polymerization of the monomer (iii) are carried out in sequence. In the present invention, it is preferable that each of the polymerizations is sequentially carried out in one polymerization tank. The temperature of the reaction system during the polymerization is preferably 30 to 120 °C, more preferably 50 to 100 °C.

In any of the emulsion polymerization of the monomer (i), the seed emulsion polymerization of the monomer (ii) and the seed emulsion polymerization of the monomer (iii), if necessary, a reactive ultraviolet absorber, for example, 2-[2-hydroxy-5-(2-methacryloyloxyethyl)phenyl]-2H-1,2,3-benzotriazole and the like can be added. The reactive ultraviolet absorber is introduced into the molecular chain of the acrylic multilayered polymer (A), and the ultraviolet resistance of the acrylic multilayered polymer (A) is improved. The amount of the reactive ultraviolet absorber added is preferably 0.05 to 5 parts by mass with respect to 100 parts by mass of the total amount of the monomers used in the production of the acrylic multilayered polymer (A).

Chain transfer agent can be used in each polymerization for the regulation of molecular weight. The chain transfer agent used for each polymerization is not particularly limited. As examples of the chain transfer agent, mentioned can be alkyl mercaptans such as n-octyl mercaptan, n-dodecyl mercaptan, t-dodecyl mercaptan, and n-hexadecyl mercaptan; xanthogen disulfides such as dimethyl xanthogen disulfide and diethyl xanthogen disulfide; thiuram disulfides such as tetrathiuram disulfide; halogenated hydrocarbons such as carbon tetrachloride and ethylene bromide. The amount of the chain transfer agent used can be appropriately set within a range in which each of the polymers (I), (II), and (III) can be adjusted to a predetermined molecular weight. The amount of the chain transfer agent used in the seed emulsion polymerization of the monomer (iii) can be appropriately set so that the acrylic multilayered polymer has a desired melt flow rate. The suitable amount of the chain transfer agent used in each polymerization depends on the amount of the polymerization initiator used in the polymerization and the like. The amount of the chain transfer agent used in the seed emulsion polymerization of the monomer (iii) is preferably 0.05 to 2 parts by mass, more preferably 0.08 to 1 part by mass with respect to 100 parts by mass of the monomer (iii).

Next, the latex obtained by the above polymerization is coagulated. The coagulation of the latex can be performed by a known method. Examples of the coagulation method can include a freeze coagulation method, a salting out coagulation method, and an acid coagulation method. Of these, the freeze-coagulation method that does not require addition of a coagulant as an impurity or the salting-out coagulation method that can be washed out is preferable from the viewpoint that a coagulated product having few impurities can be obtained. Latex spray drying can also be used instead of latex coagulation. Before coagulating or spray-drying the latex, it is preferable to filter the latex with a wire mesh having

a mesh size of 50 μm or less in order to remove foreign substances.

The slurry obtained by solidification is washed with water or the like, if necessary, and then dehydrated. It is preferable to repeat washing and dehydration so that the properties of the acrylic multilayered polymer (A) are within the desired range. Water-soluble components such as emulsifiers and catalysts can be removed from the slurry by washing and dehydrating the slurry. The slurry can be washed and dehydrated by, for example, a filter press, a belt press, a Gina type centrifuge, a screw decanter type centrifuge, or the like. From the viewpoint of productivity and washing efficiency, it is preferable to use a decanter type centrifugal dehydrator. The slurry is preferably washed and dehydrated at least twice. As the number of washings and dehydrations increases, the residual amount of water-soluble components decreases. However, from the viewpoint of productivity, the number of washings and dehydrations is preferably 3 times or less.

Dehydration is carried out so that the water content of the slurry is preferably less than 0.3% by mass, more preferably less than 0.2% by mass. Drying of the dehydrated slurry is preferably carried out at a temperature of 40 to 80 °C in order to further reduce the water content while preventing deterioration of the polymer. The dehydrated slurry is dried over an average residence time of preferably 0.5 to 5 hours, more preferably 1 to 3 hours. As the water content after dehydration and drying decreases, the warm water whitening resistance and boiling water whitening resistance tend to be improved.

The methacrylic resin (B) used in the present invention comprises a structural unit derived from methyl methacrylate and, if necessary, a structural unit derived from a monofunctional monomer other than methyl methacrylate. The total amount of the structural unit derived from methyl methacrylate and the structural unit derived from the monofunctional monomer other than methyl methacrylate is preferably 100% by mass in the methacrylic resin (B).

The amount of structural unit derived from methyl methacrylate in the methacrylic resin (B) is 99% by mass or more, preferably more than 99% by mass, more preferably more than 99.5% by mass, still more preferably 100% by mass with respect to the amount of all structural units of the methacrylic resin (B). The amount of structural unit derived from the monofunctional monomer other than methyl methacrylate in the methacrylic resin (B) is 1% by mass or less, preferably less than 1% by mass, more preferably less than 0.5% by mass, still more preferably 0% by mass with respect to the amount of all structural units of the methacrylic resin (B).

As examples of monofunctional monomers other than methyl methacrylate, mentioned can be acrylic acid ester monomer such as methyl acrylate, ethyl acrylate, butyl acrylate, propyl acrylate, hexyl acrylate, cyclohexyl acrylate, 2-ethylhexyl acrylate, phenyl acrylate and benzyl acrylate; methacrylic acid esters other than methyl methacrylate such as ethyl methacrylate, butyl methacrylate, propyl methacrylate, hexyl methacrylate, cyclohexyl methacrylate, phenyl methacrylate, and benzyl methacrylate; vinyl acetate; aromatic vinyl compounds such as styrene, p-methylstyrene, o-methylstyrene, m-methylstyrene, α-methylstyrene, and vinylnaphthalene; ethylenically unsaturated nitriles such as acrylonitrile and methacrylonitrile; α,β-unsaturated carboxylic acids such as acrylic acid, methacrylic acid, and crotonic acid; maleimide compounds such as N-ethylmaleimide and N-cyclohexylmaleimide. Of these, C1-6 alkyl acrylate is preferable. The monofunctional monomer can be used alone or in combination of two or more. The methacrylic resin (B) preferably does not comprise a structural unit derived from a polyfunctional monomer.

The methacrylic resin (B) has a glass transition temperature of preferably 95 °C or higher, more preferably 100 °C or higher, still more preferably 105 °C or higher. The methacrylic resin (B) has a melt flow rate of preferably 0.5 to 20 g/10min, more preferably 0.8 to 10 g/10min under a load of 3.8 kg and a temperature of 230 °C.

The methacrylic resin (B) has a weight average molecular weight (Mw) of preferably 60 thousand to 150 thousand, more preferably 70 thousand to 140 thousand. The weight average molecular weight (Mw) of the methacrylic resin (B) is preferably set such that the ratio Mw/Mn of the weight average molecular weight Mw to the number average molecular weight Mn of the acetone-soluble contained in the acrylic resin film is in a desired range.

The methacrylic resin (B) is not particularly limited by the production method thereof. For example, it can be obtained by carrying out a known polymerization reaction such as a radical polymerization reaction or an anionic polymerization reaction by a known polymerization method such as a bulk polymerization method or a solution polymerization method. A commercially available resin can be used as the methacrylic resin (B). As the commercially available resin, mentioned can be, for example, PARAPET (Trade Mark) produced by Kuraray Co., Ltd.; ACRYPET (Trade Mark) produced by Mitsubishi Rayon Co., Ltd., SUMIPEX (Trade Mark) produced by Sumitomo Chemical Co., Ltd., DELPET (Trade Mark) produced by Asahi Kasei Chemicals Co., Ltd., PARAGRASS (Trade Mark) and OROGRASS (Trade Mark) produced by Dow Chemical Co., Ltd. and the like. Further, a methacrylic resin specified in ISO 8257-1 may be used.

The mass ratio of the methacrylic resin (B) to the acrylic multilayered polymer (A) is 10/90 to 50/50, preferably 15/85 to 35/65, and more preferably 18/82 to 32/68.

The ultraviolet absorber (C) used in the present invention is a compound having a hydroxyphenyltriazine skeleton. Examples of the ultraviolet absorber (C) used in the present invention can include a compound represented by formula (X). In formula (X), $R^1$ is an organic group, preferably a substituted or unsubstituted alkoxy group, and more preferably a branched-chain alkoxy group having 6 to 10 carbon atoms. In formula (X), n is an integer of 1 to 5, preferably 1 or 2. When n is 1, the OH group is preferably bonded to the 2-position of the phenyl group. In formula (X), m is 5-n,

preferably 1 or 2. When m is 2 or more, $R^1$ may be the same or different, but is preferably the same. In formula (X), $R^2$ and $R^3$ are independently hydrogen atom or organic group, preferably hydrogen atom or substituted or unsubstituted aryl group, more preferably substituted or unsubstituted biphenylyl group, still more preferably 1,1'-biphenyl-4-yl group. The hydroxyphenyl group bonded to the triazine ring is preferably substituted with an alkoxy group having 6 to 12 carbon atoms. The number of hydroxyphenyl groups substituted with the alkoxy group bonded to the triazine ring can be 3, preferably 2, and more preferably 1.

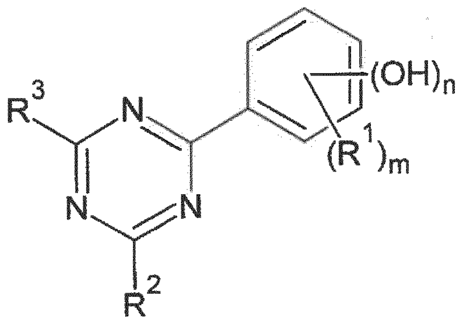

(X)

As examples of the compound having a hydroxyphenyltriazine skeleton, mentioned can be, for example, 2- (2-hydroxyphenyl) -1,3,5-triazine, 2,4,6-tris (2-hydroxy-4-octyloxyphenyl) -1,3,5-triazine, 2,4,6-tris (2-hydroxy-4-hexyloxy-3-methylphenyl) -1,3,5-triazine, 2- (2-hydroxy-4-octyloxyphenyl) -4,6-bis (2,4-dimethylphenyl)-1,3,5-triazine, 2- (2,4-dihydroxyphenyl) -4,6-bis (2,4-dimethylphenyl) -1,3,5-triazine, 2,4-bis (2-hydroxy-4-propyloxyphenyl) -6- (2,4-dimethylphenyl) -1, 3, 5-triazine, 2- (2-hydroxy-4-octyloxyphenyl)-4,6-bis (4-methylphenyl) -1,3,5-triazine, 2- (2-hydroxy-4-dodecyloxyphenyl) -4,6-bis (2,4-dimethylphenyl) -1,3,5-triazine, 2- (2-hydroxy-4-tridecyloxyphenyl) -4,6-bis (2,4-dimethylphenyl)-1,3,5-triazine, 2- [2-hydroxy-4- (2-hydroxy-3-butyloxy-propoxy) phenyl] -4,6-bis (2,4-dimethylphenyl) -1,3,5-triazine, 2- [2-hydroxy-4-(2-hydroxy-3-octyloxy-propyloxy) phenyl] -4,6-bis (2,4-dimethylphenyl) -1,3,5-triazine, 2- [4-(dodecyloxy / tridecyloxy-2-hydroxypropoxy) -2-hydroxy-phenyl] -4,6-bis (2,4-dimethylphenyl)-1,3,5-triazine, 2- [2-hydroxy-4- (2-hydroxy-3-dodecyloxy-propoxy) phenyl] -4,6-bis (2,4-dimethylphenyl) -1,3,5-triazine, 2- (2-hydroxy-4-hexyloxyphenyl) -4,6-diphenyl-1,3,5-triazine, 2-(2-hydroxy-4-methoxyphenyl) -4,6-diphenyl-1,3,5-triazine, 2,4,6-tris [2-hydroxy-4- (3-butoxy-2-hydroxy-propoxy) phenyl] -1,3,5-triazine, 2- (2-hydroxyphenyl) -4- (4-methoxyphenyl) -6-phenyl-1,3,5-triazine, 2- {2-hydroxy-4- [3- (2-ethylhexyl-1-oxy) -2-hydroxypropyloxy] phenyl} -4,6-bis (2,4-dimethylphenyl) -1,3,5-triazine, 2-[4,6-bis (1,1'-biphenyl-4-yl) -1,3,5-triazine-2-yl] -5-[(2-ethylhexyl) oxy] phenol, 2,4-bis (2-hydroxy-4-butoxyphenyl) -6-(2,4-bis (butoxyphenyl) -1,3,5-triazine, 2- [4- (4,6-bis (biphenyl-4-yl)-[1,3,5] triazine-2-yl) -3-hydroxy-phenoxy) -propionic acid 6-methylheptyl ester, 5- [2-hydroxy-3- (dodecyloxy) propoxy] -2-(4- (4,6-bis (2,4-dimethylphenyl)-[1,3,5] triazine-2-yl) phenol, 5- [2-hydroxy-3-(tridecyloxy) propoxy] -2- (4- (4,6-bis (2,4-dimethylphenyl)-[1,3,5] triazine-2-yl) phenol, 5-[2-hydroxy-3- (2-ethylhexyloxy) propoxy] -2- (4-(4,6-bis (2,4-dimethylphenyl)-[1,3,5] triazine-2-yl) ) phenol, 2- [4- (4,6-bis {2-hydroxy-4 [1- (6-methyl-heptyloxycarbonyl) -ethoxy] -phenyl}-[1,3,5] triazine-2-yl) -3-hydroxy-phenoxy] -propionic acid 6-methylheptyl ester and so on.

The acrylic resin film of the present invention may contain other polymers or resins, or additives for resins, if necessary. Examples of the additive for resins can include an ultraviolet absorber other than the ultraviolet absorber (C), a light diffuser, a delustering agent, a filler, an antioxidant, a heat deterioration inhibitor, a light stabilizer, a plasticizer, a lubricant, a mold-releasing agent, antistatic agents, flame retardants, dyes and pigments, organic dyes, impact resistance modifiers, foaming agents, and phosphors. The total content of the additives for resin is preferably 0 to 10 parts by mass, more preferably 0 to 5 parts by mass, and further preferably 0 to 2 parts by mass with respect to 100 parts by mass of the acrylic resin film. Other polymers or resins or additives for resins may be added at the time of melting the resin, may be dry-blended into the resin pellets, or may be added by the masterbatch method.

Examples of other polymers or resins can include olefin resins such as polyethylene, polypropylene, polybutene-1, poly-4-methylpentene-1, and polynorbornene; ethylene-based ionomers; styrene-based resins such as polystyrene, styrenemaleic anhydride copolymers, high impact polystyrene, AS resins, ABS resins, AES resins, AAS resins, ACS resins, and MBS resins; methyl methacrylate-styrene copolymer; ester resins such as polyethylene terephthalate and polybutylene terephthalate; polyamides such as nylon 6, nylon 66 and polyamide elastomers; polycarbonate, polyvinyl chloride, polyvinylidene chloride, polyvinyl alcohol, ethylene-vinyl alcohol copolymers, polyacetals, vinylidene fluoride, polyurethane, modified polyphenylene ethers, polyphenylene sulfides, and silicone modified resins; acrylic rubbers, acrylic thermoplastic elastomers, and silicone rubbers; styrene-based thermoplastic elastomer such as SEPS, SEBS, and SIS; olefin-based rubbers such as IR, EPR, and EPDM. These can be used alone or in combination of two or more.

As examples of the light diffusing agent or delustering agent, mentioned can be glass fine particles, polysiloxane-based crosslinked fine particles, crosslinked polymer fine particles, talc, calcium carbonate, calcium phosphate, titanium

oxide, barium sulfate and other inorganic fine particles, inorganic or organic balloons, and organic fine particles. These can be used alone or in combination of two or more.

The light diffusing agent or delustering agent to be blended in the acrylic resin film has an average particle size of preferably 67% or less, more preferably 40% or less, still more preferably 13 % or less with respect to the thickness of the acrylic resin film.

As examples of the filler, mentioned can be calcium carbonate, talc, carbon black, titanium oxide, silica, mica, clay, barium sulfate, magnesium carbonate and the like. These can be used alone or in combination of two or more.

As examples of the antioxidant, mentioned can be phosphorus-based antioxidants, hindered phenol-based antioxidants, and thioether-based antioxidants. From the viewpoint of the effect of preventing deterioration of optical properties due to coloring, phosphorus-hindered phenolic antioxidants, phosphorus-based antioxidants or hindered phenol-based antioxidants is preferable, and a combination of phosphorus-based antioxidants and hindered phenolic antioxidants is preferable. When a phosphorus-based antioxidant and a hindered phenol-based antioxidant are used in combination, the amount used of the phosphorus-based antioxidant : the amount used of the hindered phenol-based antioxidant is preferably 1 : 5 to 2 : 1, more preferably 1 : 2 to 1 : 1 by mass ratio.

As the phosphorus antioxidants, preferable are 2,2-methylene bis (4,6-di-tert-butylphenyl) octylphosphite (manufactured by ADEKA; trade name: ADEKA STAB HP-10), tris (2,4-di-tert-butylphenyl) phosphite (manufactured by BASF; trade name: IRGAFOS168), and 3,9-bis (2,6-di-tert-butyl-4-methylphenoxy) -2,4,8,10-tetraoxa -3,9-diphosphaspiro [5.5] undecane (manufactured by ADEKA; trade name: ADEKA STAB PEP-36) and the like.

As the hindered phenol-based antioxidants, preferable are pentaerythrityl-tetrakis [3- (3,5-di-tert-butyl-4-hydroxyphenyl) propionate] (manufactured by BASF; trade name IRGANOX1010) and octadecyl-3-(3,5-di-tert-butyl-4-hydroxyphenyl) propionate (manufactured by BASF; trade name IRGANOX1076) and the like.

As the phosphorus-hindered phenolic antioxidant, preferable are 6- [3- (3-tert-butyl-4-hydroxy-5-methyl) propoxy] -2,4,8,10-tetra-tert-butyldibenz [d,F] [1,3,2] -dioxasphosphepine (manufactured by Sumitomo Chemical Industries, Ltd .; trade name: Sumilizer GP) and the like. These antioxidants may be used alone or in combination of two or more.

As examples of the heat deterioration inhibitor, preferable are 2-tert-butyl-6- (3'-tert-butyl-5'-methyl-hydroxybenzyl) -4-methylphenyl acrylate (manufactured by Sumitomo Chemical Co., Ltd .; trade name: Sumilyzer GM), and 2,4-di-tert-amyl-6- (3',5'-di-tert-amyl-2'-hydroxy-$\alpha$-methylbenzyl) phenyl acrylate (manufactured by Sumitomo Chemical Co., Ltd .; trade name Sumilyzer GS) and the like.

As examples of the ultraviolet absorber, mentioned can be benzophenones, benzotriazoles, triazines (excluding the ultraviolet absorber (C)), benzoates, salicylates, cyanoacrylates, oxalic acid anilides, malonic acid esters, and formamidines. These can be used alone or in combination of two or more. Among these, benzotriazoles or ultraviolet absorbers having a maximum molar extinction coefficient $\varepsilon_{max}$ at a wavelength of 380 to 450 nm of 1200 $dm^3mol^{-1}cm^{-1}$ or less are preferable.

As examples of benzotriazoles, mentioned can be 2- (2H-benzotriazole-2-yl) -4- (1,1,3,3-tetramethylbutyl) phenol, 2- (2H-benzotriazole-2-yl) -4,6-bis (1-methyl-1-phenylethyl) phenol, 2,2'-methylene bis [6- (2H-benzotriazole-2-yl) -4-tert-octylphenol], 2- (5-octylthio- 2H-benzotriazole-2-yl) -6-tert-butyl-4-methylphenol and the like.

As examples of the ultraviolet absorber having a maximum molar extinction coefficient $\varepsilon_{max}$ of 1200 $dm^3mol^{-1}cm^{-1}$ or less at a wavelength of 380 to 450 nm, mentioned can be 2-ethyl-2'-ethoxy-oxalanilide (manufactured by Clariant Japan; trade name Sandeuboa VSU) and so on.

As examples of the light stabilizer, mentioned can be hindered amines such as compounds having a 2,2,6,6-tetraalkylpiperidine skeleton and the like.

As examples of the lubricant, mentioned can be stearic acid, behenic acid, stearoamic acid, methylene bis-stearoamide, hydroxystearic triglyceride, paraffin wax, ketone wax, octyl alcohol, and cured oil. These can be used alone or in combination of two or more.

As examples of the release agent, mentioned can be higher alcohols such as cetyl alcohol and stearyl alcohol; and glycerin higher fatty acid esters such as stearic acid monoglyceride and stearic acid diglyceride. These can be used alone or in combination of two or more. It is preferable to use higher alcohols and glycerin fatty acid monoester in combination as a release agent. When the higher alcohols and the glycerin fatty acid monoester are used in combination, the ratio is not particularly limited, but the amount of the higher alcohols used : the amount of the glycerin fatty acid monoester used is preferably 2.5 : 1 to 3.5 : 1, more preferably 2.8 : 1 to 3.2 : 1.

As the organic dye, a compound having a function of converting ultraviolet rays into visible light or the like is preferably used.

As examples of the fluorescent substance, mentioned can be fluorescent pigments, fluorescent dyes, fluorescent white dyes, fluorescent whitening agents, and fluorescent bleaching agents. These can be used alone or in combination of two or more.

The acrylic resin film of the present invention can be obtained by a known film forming method. Examples of the film forming method can include an extrusion molding method, an inflation molding method, a blow molding method, a melt casting method, and a solution casting method. Of these, the extrusion molding method is preferable. According

to the extrusion molding method, it is possible to obtain a film having improved toughness, excellent handleability, and an excellent balance among toughness, surface hardness and rigidity. The temperature of the resin discharged from the extruder is set to preferably 160 to 270 °C, more preferably 220 to 260 °C.

From the viewpoint of obtaining a film having good surface smoothness, good mirror gloss, and low haze, among the extrusion molding methods, preferable is a method comprising extruding the methacrylic resin composition of the present invention in a molten state through a T-die, and then sandwiching the extruded product between two or more of mirror surface rolls or mirror surface belts to form into a film. The mirror surface rolls or mirror surface belts are preferably made of metal. The linear pressure between a pair of mirror surface rolls or mirror surface belts is preferably 2 N/mm or more, more preferably 10 N/mm or more, and even more preferably 30 N/mm or more.

It is preferable that the surface temperature of the mirror surface rolls or the mirror surface belts is 130 °C or lower. It is preferable that at least one of the mirror surface rolls or the mirror surface belts has a surface temperature of 60 °C or higher. When the surface temperature is set to such a value, the resin discharged from the extruder can be cooled at a speed faster than natural cooling, and it is easy to produce a film having excellent surface smoothness and low haze.

The acrylic resin film of the present invention may be stretched. By the stretching treatment, the mechanical strength is increased, and a film that is hard to crack can be obtained. The stretching method is not particularly limited, and examples thereof can include a uniaxial stretching method, a simultaneous biaxial stretching method, a sequential biaxial stretching method, and a tubular stretching method. The temperature at the time of stretching is preferably 100 to 200 °C, more preferably 120 °C to 160 °C from the viewpoint that the film can be uniformly stretched and a high-strength film can be obtained. Stretching is usually carried out at 100-5000 %/min on a length basis. Stretching is preferably performed so that the area ratio is 1.5 to 8 times. By performing heat fixation after the stretching, a film having less heat shrinkage can be obtained.

The thickness of the acrylic resin film of the present invention is not particularly limited, but is preferably 20 μm or more and 100 μm or less, more preferably 30 μm or more and 80 μm or less, further more preferably 45 μm or more and 70 μm or less, still more preferably 50 μm or more and 60 μm or less. Generally, the thinner the film, the lower the UV absorption capacity.

The acrylic resin film of the present invention is less likely to cause bleed-out of additives such as ultraviolet absorbers. The acrylic resin film of the present invention has small thickness unevenness even in a thin thickness. Further, the acrylic resin film of the present invention has excellent stress whitening resistance and does not whiten even when bent.

The acrylic resin film of the present invention has an acetone-insoluble content of 35 to 55% by mass, preferably 38 to 52% by mass, based on the mass of the film. The acetone-insoluble content is determined as follows. A predetermined amount of acrylic resin film is immersed in acetone overnight to obtain a solution, the solution is centrifuged to separate it into an acetone-insoluble component and an acetone-soluble component, and the separated acetone-insoluble component is washed with acetone, and then acetone is removed by evaporating at room temperature to obtain dry acetone insoluble component and its mass is measured.

The acrylic resin film of the present invention can be used as a polarizer protective film, a retardation film, a liquid crystal protective plate, a surface material of a portable information terminal, a display window protective film of a portable information terminal, a light guide film, a transparency conductive film which silver nanowires or carbon nanotubes is coated on the surface of, front plate applications of various displays, etc. ; building material film, retroreflective film, IR cut film, security film, shatterproof film, decorative film, metal decorative film, solar cell back sheet, front sheet for flexible solar cell, shrink film, film for in-mold label, base film for gas barrier film, surface protective film for solar cell, sealing film for solar cell, back surface protective film for solar cell, base film for solar cell, a protective film for gas barrier films and the like.

A functional layer can be provided on at least one surface of the acrylic resin film of the present invention. As examples of the functional layer, mentioned can be a hard coat layer, an anti-glare layer, an anti-reflection layer, an antisticking layer, a light diffusion layer, a matte layer, an anti-static layer, an anti-fouling layer, an easy-to-slip layer, a gas barrier layer, and a printing layer.

Since the acrylic resin film of the present invention has excellent adhesion to a thermoplastic resin or the like, another thermoplastic resin film can be laminated on at least one surface of the acrylic resin film of the present invention. The laminated film obtained by laminating the acrylic resin film of the present invention and another thermoplastic resin film is not particularly limited by the manufacturing method thereof. For example, it can be manufactured using methods such as coextrusion molding, press molding, coating extrusion molding, insert molding, in-mold molding, welding, adhesion, and pressure bonding. As examples of the thermoplastic resin constituting the other thermoplastic resin film that can be used for the laminated film, mentioned can be a polycarbonate polymer, a vinyl chloride polymer, a vinylidene fluoride polymer, a methacrylic resin, an ABS resin, an AES resin, an AS resin, the above-mentioned thermoplastic resin and the like.

Next, the effects of the present invention will be described with reference to Examples and Comparative Examples. The present invention is not limited to the following examples. In the following description, unless otherwise specified, "part(s)" represents "part(s) by mass" and "%" represents "% by mass".

The resin film was evaluated by the following method.

(Processability)

A resin film (thickness 200 μm) was punched out so that the tensile direction in the tensile test was parallel to the MD direction to obtain a JIS K 7127 (ISO572-3) type 1B test piece. The test piece was pulled at 200 mm/min and the elongation at break (EL) was measured. The elongation at break (EL) is expressed by the percentage (= $(l-l_0)/l\times100$) of the increased amount ($l-l_0$) from the distance ($l_0$) between chucks when the test piece is attached to the distance (1) between the chucks immediately before breakage. As the elongation at break increases, the formability is good. In the present invention, the breaking elongation is preferably 50% or more.

(Formability)

A resin film (thickness 200 μm) was cut to obtain a test piece of 18 mm × 10 mm. Using a rotary rheometer (DHR manufactured by TA Instrument Co., Ltd.), the test piece was elongational deformed under the conditions of a temperature of 200 °C (standby time 30 seconds) and a strain rate of 6.0 $s^{-1}$. And the cross-sectional area of the test piece and the load were measured at each time t, and the uniaxial elongation viscosity was calculated from the measured values. The cross-sectional area S(t) of the test piece can also be calculated from the initial cross-sectional area $S_0$ and the strain rate ε by the formula : $S_0 \times \exp(-\varepsilon t)$.

A data set of the time t (unit: second) and the uniaxial elongation viscosity η (unit: Pa·s) in the range from the time when 0.03 second has passed from the onset of measurement to the time when 0.1 second has passed from the onset of measurement was approximated to a linear function : $\eta = a\times t + b$ by the least squares method, and the slope a (strain hardening) of the linear function was calculated. The larger the strain hardening, the better the formability. In the present invention, the slope is preferably $1.0 \times 10^4$ Pa or more.

(Weatherability)

A resin film was cut to obtain a 50 mm × 50 mm test piece. Using a super UV tester (manufactured by Iwasaki Electric Co., Ltd .; SUV-W161), the test piece was irradiated with ultraviolet rays for 500 hours under the conditions of a black panel temperature of 83 °C, a relative humidity of 50%, and an irradiation energy of 100 $mW/cm^2$. Then, the test piece was taken out from the tester, and the transmittance in the wavelength range of 200 to 800 nm was measured with a spectrophotometer (UV3600 manufactured by Shimadzu Corporation). The lower the transmittance at a wavelength of 350 nm, the better the weatherability. In the present invention, the transmittance is preferably 5% or less.

(Acetone insoluble)

A predetermined amount of an acrylic resin film was immersed in acetone overnight to obtain a solution. The solution was centrifuged and separated into an acetone-insoluble component and an acetone-soluble component. The separated acetone insoluble component was washed with acetone, and then acetone was evaporated at room temperature to obtain a dry acetone insoluble component, and the mass thereof was measured.

(Production Example 1) Acrylic multilayered polymer (A1)

A reactor equipped with a stirrer, a thermometer, a nitrogen gas introduction tube, a monomer introduction tube and a reflux condenser was charged with 1050 parts of deionized water, 1 part of sodium dodecylbenzenesulfonate and 0.05 part of sodium carbonate for reaction. The inside of the reactor was sufficiently replaced with nitrogen gas to make it virtually oxygen-free. The temperature inside the reactor was set to 80 °C. To that, 0.1 part of a 3% aqueous potassium persulfate solution was added, and the mixture was stirred for 5 minutes. Then, 26.2 parts by mass of mixture (i) composed of 49.9% of methyl methacrylate (MMA), 49.9% of butyl acrylate (BA) and 0.2% of allyl methacrylate (ALMA) was continuously added over 20 minutes. After completion of the addition, the polymerization reaction was further carried out for at least 30 minutes so that the polymerization ratio was 98% or more.

Next, 0.05 part of a 3% aqueous potassium persulfate solution was added to the reactor, and the mixture was stirred for 5 minutes. Then, 157.4 parts by mass of mixture (ii) composed of 5% of MMA, 93.5% of BA, and 1.5% of ALMA was continuously added over 40 minutes. After completion of the addition, the polymerization reaction was further carried out for at least 30 minutes so that the polymerization ratio was 98% or more.

Next, 0.5 part of a 3% aqueous potassium persulfate solution was added to the reactor, and the mixture was

stirred for 5 minutes. Then, 341.1 parts of mixture (iii) composed of 87.2% of MMA, 12.5% of BA, and 0.3% of n-octyl mercaptan (n-OM) was continuously added over 100 minutes. After completion of the addition, the polymerization reaction was further carried out for at least 60 minutes so that the polymerization ratio was 98% or more to obtain a latex containing an acrylic multilayered polymer (A1) having a number average particle diameter of 100 nm.

Subsequently, the emulsion containing the acrylic multilayered polymer (A1) was frozen at -30 °C over 4 hours. The frozen emulsion was added to twice the amount of the frozen emulsion in warm water at 80 °C to dissolve it, and then held at 80 °C for 20 minutes to obtain a slurry. Then, the slurry was dehydrated and further dried at 70 °C to obtain an acrylic multilayered polymer (A1) powder. This powder was pelletized.

(Production Example 2) Acrylic multilayered polymer (A2)

A powder of an acrylic multilayered polymer (A2) was obtained in the same manner as in Production Example 1 except that, in the mixture (ii), the amount of MMA was changed to 4.9%, the amount of BA was changed to 92.2% and the amount of ALMA was changed to 2.9%. This powder was pelletized.

(Production Example 3) Acrylic multilayered polymer (A3)

A powder of an acrylic multilayered polymer (A3) was obtained in the same manner as in Production Example 1 except that, in the mixture (ii), the amount of MMA was changed to 5%, the amount of BA was changed to 94.4% and the amount of ALMA was changed to 0.6%. This powder was pelletized.

(Example 1)

Using a twin-screw extruder, 80 parts of the acrylic multilayered polymer (A1) pellets, 20 parts of methacrylic resin (B1) (MMA-derived structural unit 100%, weight average molecular weight 80 thousand), 1 part of 2- [4,6-bis (1,1'-biphenyl-4-yl) -1,3,5-triazine-2-yl] -5-[(2-ethylhexyl) oxy] phenol (manufactured by BASF; trade name Tinuvin1600) (formula X1) were kneaded, and pelletized using a pelletizer to obtain a thermoplastic resin (R1).

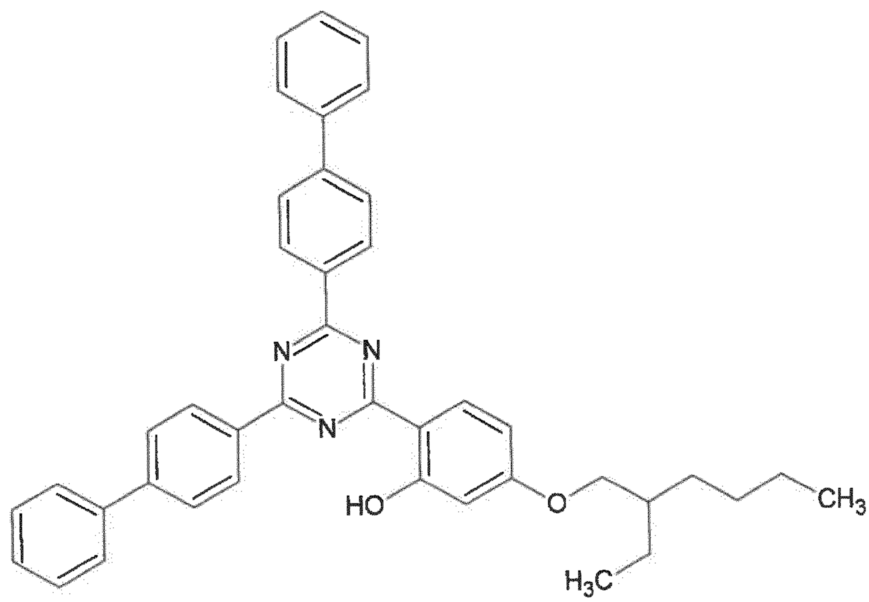

(X1)

Using a single-screw vent extruder with a screw diameter of 50 mm and a T-die with a width of 500 mm and a lip opening of 0.8 mm, the thermoplastic resin (R1) was melt-extruded at a discharge rate of 10 kg/h and a resin temperature of 260 °C to obtain a film-like melt, and then the melt was compressed at a linear pressure of 30 kg/cm using a first nip roll with a spacing of 50 μm composed of a mirror-finished metal elastic roll whose temperature was adjusted to 64 °C and a mirror-finished metal rigid roll whose temperature was adjusted to 79 °C. And then the first compressed product was compressed at a linear pressure of 30 kg/cm using a second nip roll with a spacing of 50 μm composed of a mirror-finished metal rigid roll whose temperature is adjusted to 65 °C and a mirror-finished metal rigid roll whose temperature is adjusted to 60 °C to obtain a single-layer resin film (1) having a thickness of 53 μm.

The evaluations were performed on the obtained resin film (1). The evaluation results are shown in Table 1.

The resin film (1) was excellent in processability, formability and weatherability.

(Example 2)

A resin film (2) was obtained in the same manner as in Example 1 except that 2- [4,6-bis (1,1'-biphenyl-4-yl) -1,3,5-triazine-2-yl] -5-[(2-ethylhexyl) oxy] phenol was changed to 2,4,6-tris (2-hydroxy-4-hexyloxy-3-methylphenyl) -1,3,5-triazine (manufactured by ADEKA; trade name ADEKA STAB LA-F70) (formula X2). The evaluation results are shown in Table 1. The resin film (2) was excellent in processability, formability and weatherability.

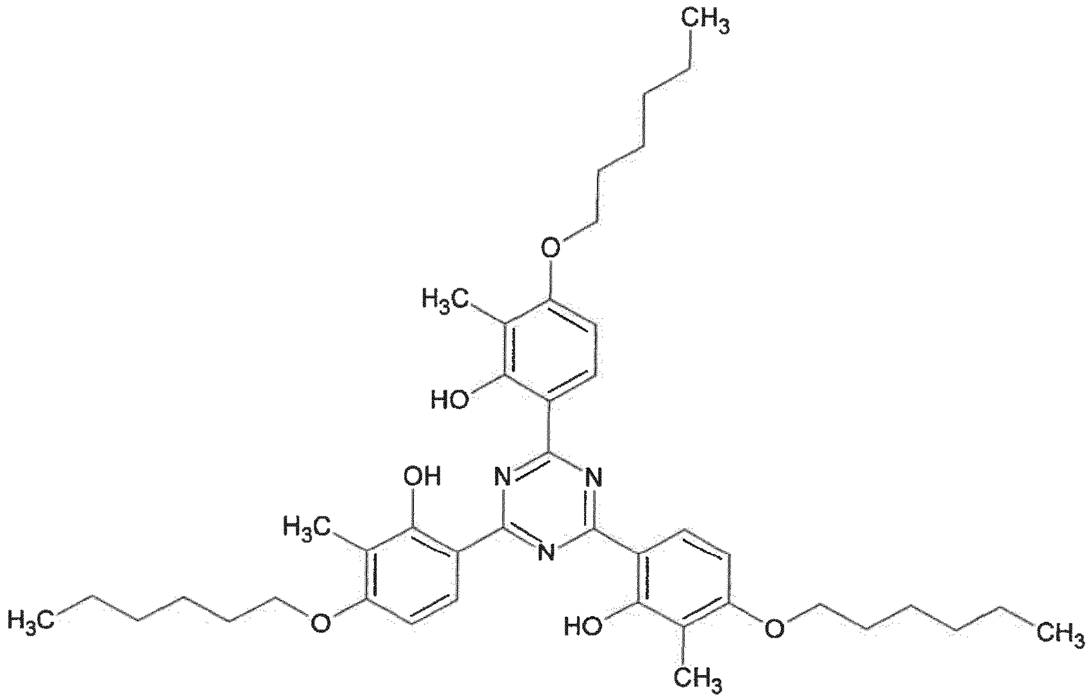

(X2)

(Example 3)

A resin film (3) was obtained in the same manner as in Example 1 except that the amount of pellets of the acrylic multilayered polymer (A1) was changed to 70 parts and the amount of methacrylic resin (B1) was changed to 30 parts. The evaluation results are shown in Table 1. The resin film (3) was excellent in processability, formability and weatherability.

(Example 4)

A resin film (4) was obtained in the same manner as in Example 3 except that the methacrylic resin (B1) was changed to a methacrylic resin (B2) (MMA-derived structural unit 100%, weight average molecular weight 110 thousand). The evaluation results are shown in Table 1. The resin film (4) was excellent in processability, formability and weatherability.

(Comparative Example 1)

A resin film (5) was obtained in the same manner as in Example 3 except that the acrylic multilayered polymer (A1) was changed to the acrylic multilayered polymer (A2). The evaluation results are shown in Table 1. The resin film (5) had poor processability, and it was predicted that the resin film (5) was easily broken during processing.

(Comparative Example 2)

A resin film (6) was obtained in the same manner as in Example 1 except that the amount of pellets of the acrylic multilayered polymer (A1) was changed to 100 parts and the amount of methacrylic resin (B1) was changed to 0 part. The evaluation results are shown in Table 1. The resin film (6) had low strain hardening, and it was predicted

that the resin film (6) was easily broken during molding.

(Comparative Example 3)

A resin film (7) was obtained in the same manner as in Example 1 except that the methacrylic resin (B1) was changed to a methacrylic resin (B3) (MMA-derived structural unit 94%, methyl acrylate-derived structural unit 6%, weight average molecular weight 120 thousand). The evaluation results are shown in Table 1. The resin film (7) was inferior in weatherability.

(Comparative Example 4)

A resin film (8) was obtained in the same manner as in Example 1 except that 2- [4,6-bis (1,1'-biphenyl-4-yl) -1,3,5-triazine-2-yl] -5-[(2-ethylhexyl) oxy] phenol was changed to 2,2'-methylene bis [6- (2H-benzotriazole-2-yl) -4-tert-octylphenol] (manufactured by ADEKA; trade name: ADEKA STAB LA-31RG) (formula X3). The evaluation results are shown in Table 1. The resin film (8) was inferior in weatherability.

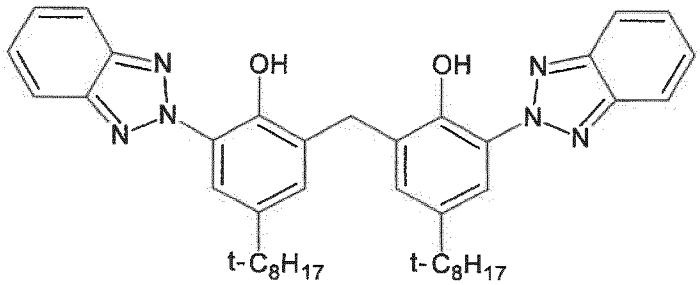

(X3)

(Comparative Example 5)

A resin film (9) was obtained in the same manner as in Example 3 except that the acrylic multilayered polymer (A1) was changed to the acrylic multilayered polymer (A3). The evaluation results are shown in Table 1. The resin film (9) had poor processability, and it was predicted that the resin film (9) was easily broken during processing.

[Table 1]

Table 1

| | Ex. | | | | Comp. Ex. | | | | |
|---|---|---|---|---|---|---|---|---|---|
| | 1 | 2 | 3 | 4 | 1 | 2 | 3 | 4 | 5 |
| Acrylic multilayered polymer | | | | | | | | | |
| A1 [Pts.] | 80 | 80 | 70 | 70 | | 100 | 80 | 80 | |
| A2 [Pts.] | | | | | 70 | | | | |
| A3 [Pts.] | | | | | | | | | 70 |
| Methacrylic resin | | | | | | | | | |
| B1 [Pts.] | 20 | 20 | 30 | | 30 | | | 20 | 30 |
| B2 [Pts.] | | | | 30 | | | | | |
| B3 [Pts.] | | | | | | | 20 | | |
| UV absorbing agent | | | | | | | | | |
| C1 [Pts.] | 1 | | 1 | 1 | 1 | 1 | 1 | | 1 |
| C2 [Pts.] | | 1 | | | | | | | |

(continued)

| | Ex. | | | | Comp. Ex. | | | | |
|---|---|---|---|---|---|---|---|---|---|
| | 1 | 2 | 3 | 4 | 1 | 2 | 3 | 4 | 5 |
| Acrylic multilayered polymer | | | | | | | | | |
| C3 [Pts.] | | | | | | | | 1 | |
| Resin film | (1) | (2) | (3) | (4) | (5) | (6) | (7) | (8) | (9) |
| Evaluation | | | | | | | | | |
| Breaking elongation [%] | ≥50 | ≧50 | ≧50 | ≧50 | <50 | ≧50 | ≧50 | ≧50 | <50 |
| Strain hardening[Pa] | ≧$10^4$ | ≧$10^4$ | ≧$10^4$ | ≧$10^4$ | ≧$10^4$ | <$10^4$ | ≧$10^4$ | ≧$10^4$ | ≧$10^4$ |
| 350nm-Transmission [%] | 1 | 9 | 1 | 1 | 1 | 6 | 20 | 20 | 1 |
| Acetone Insoluble [%] | 48 | 48 | 40 | 40 | 41 | 60 | 48 | 48 | 42 |

The above results demonstrate that the acrylic resin film of the present invention is excellent in weatherability, processability, and forming stability, and is suitable used for decoration or in building materials.

**Claims**

1. A film, comprising
an acrylic multi-layered polymer (A) comprising an outer layer composed of a thermoplastic polymer (III) and a layer composed of a cross-linked elastomer which the outer layer covers on the surface of,
a methacrylic resin (B) comprising not less than 99 % by mass of a unit derived from methyl methacrylate and having a weight average molecular weight of not less than 50,000 and not more than 200,000 and
an ultraviolet absorbing agent (C) having a hydroxyphenyltriazine skeleton; wherein
the contained amount of the ultraviolet absorbing agent (C) is 0.1 to 1.5 % by mass relative to the total amount of the acrylic multi-layered polymer (A) and the methacrylic resin (B),
a mass ratio of the methacrylic resin (B) to the acrylic multi-layered polymer (A) is 10/90 to 50/50, the layer of the cross-linked elastomer comprises an intermediate layer composed of a cross-linked rubber polymer (II) and an inner layer composed of a cross-linked polymer (I) which the intermediate layer covers on the surface of,
the cross-linked polymer (I) comprises 40 to 98.5 % by mass of a structural unit derived from methyl methacrylate, 1 to 59.5 % by mass of a structural unit derived from a monofunctional monomer other than methyl methacrylate and 0.05 to 0.4 % by mass of a structural unit derived from a polyfunctional monomer,
the cross-linked rubber polymer (II) comprises 90 to 98.9 % by mass of a structural unit derived from an acrylic acid alkyl ester wherein the alkyl group is composed of 1 to 8 of carbon atoms, 0.1 to 8.3 % by mass of a structural unit derived from a monofunctional monomer other than acrylic acid alkyl ester, and 1 to 1.7 % by mass of a structural unit derived from a polyfunctional monomer,
the thermoplastic polymer (III) comprises 80 to 100 % by mass of a structural unit derived from a methacrylic acid alkyl ester wherein the alkyl group is composed of 1 to 8 of carbon atoms, and 0 to 20 % by mass of a structural unit derived from a monofunctional monomer other than methacrylic acid alkyl ester,
the layer of the cross-linked elastomer has an average diameter of not more than 120 nm,
the amount of the cross-linked rubber polymer (II) is 80 to 90 % by mass relative to the total amount of the cross-linked polymer (I) and the cross-linked rubber polymer(II), and
an amount of acetone insoluble relative to the amount of the film is 35 to 55 % by mass.

2. The film according to claim 1, wherein a breaking elongation (EL) in tensile testing is not less than 50 % in a MD direction of the film.

3. The film according to claim 1, wherein a slope is not less than $1.0 \times 10^4$ Pa, wherein the slope is a slope a of a linear function : $\eta = a \times t + b$ obtained by approximating a relation of a measurement time t [unit: second] and an uniaxial elongation viscosity $\eta$ [unit : Pa·s] as measured by an uniaxial elongation viscosity measurement in the range from the time when 0.03 second has passed from the onset of the measurement to the time when 0.1 second

has passed from the onset of the measurement by the least-square method.

4. The film according to claim 1, wherein a light transmission at a wavelength of 350 nm is not more than 5 %, the light transmission is determined by measuring a film irradiated with ultraviolet for 500 hours at a black panel temperature of 83 °C, 50 % relative humidity, and an irradiation energy of 100 mW/$cm^2$.

5. The film according to claim 1, wherein a thickness of the film is not less than 20 μm and not more than 100 μm.

6. The film according to any one of claims 1 to 5, further comprising a delustering agent.

7. A film comprising a functional layer and the film according to any one of claims 1 to 6 on which the functional layer is layered.

8. A film comprising a laminate of the film according to any one of claims 1 to 7 and another thermoplastic resin film.

9. The film according to any one of claims 1 to 8, being used for decoration.

10. The film according to any one of claims 1 to 9, being used in building material.

**INTERNATIONAL SEARCH REPORT**

International application No. PCT/JP2019/039085

A. CLASSIFICATION OF SUBJECT MATTER
Int.Cl. C08J5/18(2006.01)i, B32B27/00(2006.01)i, B32B27/18(2006.01)i, B32B27/20(2006.01)i, B32B27/30(2006.01)i, C08F265/06(2006.01)i, C08K5/3492(2006.01)i, C08L33/10(2006.01)i, C08L55/00(2006.01)i
According to International Patent Classification (IPC) or to both national classification and IPC

B. FIELDS SEARCHED
Minimum documentation searched (classification system followed by classification symbols)
Int.Cl. C08J5/18, B32B27/00, B32B27/18, B32B27/20, B32B27/30, C08F265/06, C08K5/3492, C08L33/10, C08L55/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2018/074550 A1 (KURARAY CO., LTD.) 26 April 2018, claims, paragraphs [0005], [0016], [0018]-[0046], [0103]-[0124], [0126]-[0174] (Family: none) | 1-10 |
| Y | WO 2016/157908 A1 (KURARAY CO., LTD.) 06 October 2016, paragraphs [0006]-[0009], [0038]-[0041], [0076]-[0108] & EP 3279260 A1, paragraphs [0006]-[0009], [0039]-[0042], [0082]-[0123] & US 2018/0100063 A1 & CN 107429032 A & KR 10-2017-0134341 A | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 December 2019 (06.12.2019) | 17 December 2019 (17.12.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/039085

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-032328 A (KANEKA CORP.) 17 February 2011, paragraphs [0011], [0017], [0019], [0021], [0028] (Family: none) | 1-10 |
| Y | WO 2017/188290 A1 (KURARAY CO., LTD.) 02 November 2017, paragraphs [0002], [0008], [0090] & EP 3450498 A1, paragraphs [0002], [0008], [0101] & US 2019/0136035 A1 & CN 109071911 A & KR 10-2019-0003529 A | 1-10 |
| A | WO 2014/041803 A1 (KANEKA CORP.) 20 March 2014, claims, examples & EP 2896652 A1, claims, paragraphs [0084]-[0123] & US 2015/0247013 A1 & CN 104619771 A & KR 10-2015-0054930 A | 1-10 |
| A | JP 2002-275341 A (MITSUBISHI RAYON CO., LTD.) 25 September 2002, claims, examples (Family: none) | 1-10 |
| P, Y | JP 2019-001883 A (KURARAY CO., LTD.) 10 January 2019, claims, examples (Family: none) | 1-10 |
| P, Y | JP 2019-006865 A (KURARAY CO., LTD.) 17 January 2019, claims, examples (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017008222 A
- JP 2011227530 A
- JP 2017213815 A